# EUROPEAN PATENT APPLICATION

(11) **EP 3 214 354 A1**
(43) Date of publication of application: **06.09.2017**
(21) Application number: 16849929.1
(22) Date of filing: 03.06.2016
(51) Int. Cl.: F16M 11/12, F16M 13/04

(54) **HANDHELD PAN TILT HEAD ENABLING MOTION CONTROL WITH ROCKER**

(30) Priority: 26.12.2015 CN 201510999668
(71) Applicant: Wu Han Aibird UAV Co., Ltd, Wuhan, Hubei 430223 (CN)
(72) Inventor: WANG, Xiaobo, Wuhan Hubei 430223 (CN); ZHOU, Wen, Wuhan Hubei 430223 (CN); YE, Jinghang, Wuhan Hubei 430223 (CN)
(74) Representative: Schmidt, Steffen
(86) International application number: PCT/CN2016/084674
(87) International publication number: WO 2017/107390

(57) **Abstract**

The present invention relates to a hand-held pan-tilt kit for realizing motion control with a joystick, comprising: a joystick for acquiring a user instruction; a controller connected to the joystick; wherein, the controller transmits a corresponding pan-tilt kit control signal according to the user instruction. The pan-tilt kit further comprises a first rotating means provided with a first motor, a second rotating means provided with a second motor, and a third rotating means provided with a third motor, the first electric motor, the second motor and the third motor are all electrically connected to the pan-tilt kit controller. The above hand-held pan-tilt kit for realizing motion control with a joystick is easy to operate and enables precise control of the hand-held pan-tilt kit by an external joystick.

## Description

### Technical Field

The present invention relates to a hand-held pan-tilt kit for realizing motion control with a joystick.

### Background Art

In order to obtain an excellent picture in a viewfinder, it is needed to control a posture of a pan-tilt kit during shooting. However, when shooting some fast-moving objects with the traditional hand-held pan-tilt kit, it is difficult for camera lens to keep up with the fast-moving objects, due to lack of active control or inconvenient control for the movement state of the pan-tilt kit, which limits the shooting to a large extent.

Therefore, there is a need to provide a hand-held pan-tilt kit that has both a stable shooting function and a very convenient control of state of the pan-tilt kit.

### Summary of the Invention

The object of the present invention is to provide a hand-held pan-tilt kit for realizing motion control with a joystick, and to solve the above-mentioned problems in the prior art.

The technical solution in the present invention for solving the above technical problems is as follows: a hand-held pan-tilt kit for realizing motion control with a joystick, comprising a joystick controller, a rod body, and a terminal support provided at a front end of the rod body, wherein a multidirectional regulating means is employed to connect the rod body and the terminal support, the multidirectional regulating means comprises a first rotating means directly connected to the rod body, a second rotating means connected to a rotating shaft of the first rotating means and a third rotating means connected to a rotating shaft of the second rotating means, a rotating shaft of the third rotating means is connected to the terminal support;
a pan-tilt kit controller and a radio frequency (RF) receiver are provided inside the rod body, a first motor is provided inside the first rotating means, a second motor is provided inside the second rotating means,a third motor is provided inside the third rotating means, the first electric motor, the second electric motor, the third motor and the RF receiver are all electrically connected to the pan-tilt kit controller;
the joystick controller comprises a joystick piece for acquiring an user instruction and a RF transmitter for transmitting the user instruction to the RF receiver;
the pan-tilt kit controller is configured to receive the user instruction information transmitted by the RF transmitter through the RF receiver, the pan-tilt kit controller is configured to control operations of the first electric motor, the second electric motor and the third electric motor according to the user instruction information.

Further, a rotation axis of the second rotating means and a rotation axis of the first rotating means are disposed perpendicularly to each other.

Further, a rotation axis of the third rotating means and the rotation axes of the second rotating means and the first rotating means are perpendicular to each other.

Further, the first rotating means and the second rotating means are connected by a first connecting plate, one end of the first connecting plate is connected to the rotating shaft of the first rotating means, and the other end of the first connecting plate is connected to a bearing of the second rotating means.

Further, the third rotating means and the second rotating means are connected by a second connecting plate, one end of the second connecting plate is connected to the rotating shaft of the second rotating means, and the other end of the second connecting plate is connected to a bearing of the third rotating means.

Further, the first connecting plate and the second connecting plate include a bottom plate and fixing plates provided at both ends of the bottom plate at an angle of 45 ° with the bottom plate, respectively.

Further, the joystick controller controls a pan-tilt kit swing direction and / or a pan-tilt kit swing angle and / or a pan-tilt kit swing speed.

Further, the pan-tilt kit has a follow-up mode in which the hand-held pan-tilt kit changes a shooting angle and / or a shooting direction of a shooting device in accordance with the state of the joystick, and / or a steady mode in which the hand-held pan-tilt kit is still in a steady shooting state in a bumpy environment.

Further, the joystick piece further comprises a button for switching the mode of the pan-tilt kit.

Further, the joystick controller is configured to control a motion state of the pan-tilt kit.

The invention has the advantages that: the invention provides a hand-held pan-tilt kit for realizing motion control with a joystick, which has a simple structure and is easy to use, and enables precise control of the hand-held pan-tilt kit by an external joystick.

### Brief Description of the Drawings

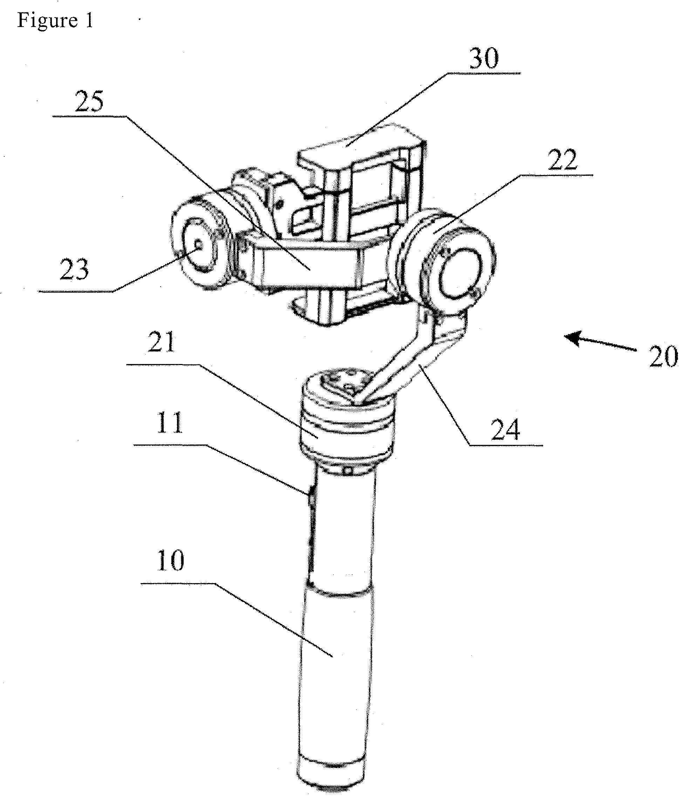

Figure 1 is a schematic diagram of a hand-held pan-tilt kit with a tracking function according to the present invention.

### Description of the Preferred Embodiments

With reference to the accompanying drawings, the principles and features of the present invention will be described hereinafter, cited examples only serve to illustrate the invention and are not intended to limit the scope of the invention.

Figure 1 shows a specific embodiment of a hand-held pan-tilt kit with a tracking function according to the present invention, comprising a joystick controller, a rod body 10 and a terminal support 30 provided at a front end of the rod body 10, wherein a multidirectional regulating means 20 is employed to connect the rod body 10 and the terminal support 30, the multidirectional regulating means 20 comprises a first rotating means 21 directly connected to the rod body 10, a second rotating means 22 connected to a rotating shaft of the first rotating means 21 and a third rotating means 23 connected to a rotating shaft of the second rotating means 22, a rotating shaft of the third rotating means 23 is connected to the terminal support 30. By regulating each rotating means, it is possible to adjust a posture and angle of the terminal holder 30 so as to freely adjust the shooting angle and to expand the angle range and manner of photographing.

In the present embodiment, a rotation axis of the second rotating means 22 and a rotation axis of the first rotating means 21 are disposed perpendicularly to each other, so that the angle of the terminal support can be freely adjusted in a two-dimensional plane. Meanwhile, a rotation axis of the third rotating means 23 and the rotation axes of the second rotating means 22 and the first rotating means 21 are perpendicular to each other, so that it is possible to freely adjust the angle of the third rotating means 23 in the other perpendicular plane and to achieve a three-dimensional adjustment.

In the present embodiment, the first rotating means 21 and the second rotating means 22 are connected by a first connecting plate 24, one end of the first connecting plate 24 is connected to the rotating shaft of the first rotating means 21, and the other end of the first connecting plate 24 is connected to a bearing of the second rotating means 22.The third rotating means 23 and the second rotating means 22 are connected by a second connecting plate 25, one end of the second connecting plate 25 is connected to the rotating shaft of the second rotating means 22, and the other end of the second connecting plate 25 is connected to a bearing of the third rotating means 23.

In the present embodiment, the first connecting plate 24 and the second connecting plate 25 include a bottom plate and fixing plates provided at both ends of the bottom plate at an angle of 45 ° with the bottom plate, respectively.

A pan-tilt kit controller and a RF receiver are provided inside the rod body 10, a first motor is provided inside the first rotating means 21, a second motor is provided inside the second rotating means 22, a third motor is provided inside the third rotating means 23, the first electric motor, the second electric motor, the third motor and the RF receiver are all electrically connected to the pan-tilt kit controller;
the joystick controller comprises a joystick piece for acquiring an user instruction and a RF transmitter for transmitting the user instruction to the RF receiver; the pan-tilt kit controller is configured to receive the user instruction information transmitted by the RF transmitter through the RF receiver, the pan-tilt kit controller is configured to control operations of the first electric motor, the second motor and the third motor according to the user instruction information.

Preferable, the joystick controller can control a pan-tilt kit swing direction and a pan-tilt kit swing angle and a pan-tilt kit swing speed. The pan-tilt kit has a follow-up mode in which the hand-held pan-tilt kit changes a shooting angle and a shooting direction of a shooting device in accordance with the state of the joystick, and a steady mode in which the hand-laeld pan-tilt kit is still in a steady shooting state in a bumpy environment.The joystick piece further comprises a button for switching the pan-tilt kit modes. The hand-held pan-tilt kit has a button for switching the modes of the pan-tilt kit; and the joystick controller is configured to control the state of the pan-tilt kit when the pan-tilt kit is moving.

During operation, the operator controls the first motor, the second motor and the third motor respectively by operating the joystick piece in the joystick controller to realize the movement of the pan-tilt kit.

The foregoing description is only preferred embodiments of the present invention, which are not intended to limit the present invention, any modification, substitution to same object and improvement made within the spirit and principles of the present invention, should be included within the protection scope of the present invention.

## Claims

1. A hand-held pan-tilt kit for realizing motion control with a joystick, **characterized in that**, comprising a joystick controller, a rod body, and a terminal support provided at a front end of the rod body, wherein a multidirectional regulating means is employed between the rod body and the terminal support, the multidirectional regulating means comprises a first rotating means directly connected to the rod body, a second rotating means connected to a rotating shaft of the first rotating means, and a third rotating means connected to a rotating shaft of the second rotating means, a rotating shaft of the third rotating means is connected to the terminal support;
a pan-tilt kit controller and a radio frequency (RF) receiver are provided inside the rod body, a first motor is provided inside the first rotating means, a second motor is provided inside the second rotating means, a third motor is provided inside the third rotating means, the first electric motor, the second electric motor, the third motor and the RF receiver are all electrically connected to the pan-tilt kit controller;
the joystick controller comprises a joystick piece for acquiring a user instruction and a RF transmitter for transmitting the user instruction to the RF receiver;
the pan-tilt kit controller is configured to receive user instruction information transmitted by the RF transmitter through the RF receiver, the pan-tilt kit controller is configured to control operation of the first electric motor, the second motor and the second motor according to the user instruction information.

2. The hand-held pan-tilt kit for realizing motion control with a joystick according to claim 1, **characterized in that**, a rotation axis of the second rotating means and a rotation axis of the first rotating means are disposed perpendicularly to each other.

3. The hand-held pan-tilt kit for realizing motion control with a joystick according to claim 2, **characterized in that**, a rotation axis of the third rotating means and the rotation axes of the second rotating means and the first rotating means are perpendicular to each other.

4. The hand-held pan-tilt kit for realizing motion control with a joystick according to claim 3, **characterized in that**, the first rotating means and the second rotating means are connected by a first connecting plate, one end of the first connecting plate is connected to the rotating shaft of the first rotating means, and the other end of the first connecting plate is connected to a bearing of the second rotating means.

5. The hand-held pan-tilt kit for realizing motion control with a joystick according to claim 4, **characterized in that**, the third rotating means and the second rotating means are connected by a second connecting plate, one end of the second connecting plate is connected to the rotating shaft of the second rotating means, and the other end of the second connecting plate is connected to a bearing of the third rotating means.

6. The hand-held pan-tilt kit for realizing motion control with a joystick according to claim 5, **characterized in that**, the first connecting plate and the second connecting plate include a bottom plate and a fixing plate provided at both ends of the bottom plate at an angle of 45 ° with the bottom plate, respectively.

7. The hand-held pan-tilt kit for realizing motion control with a joystick according to any one of claims 1-6, **characterized in that**, the joystick controller can control a pan-tilt kit swing direction and / or a pan-tilt kit swing angle and / or a pan-tilt kit swing speed.

8. The hand-held pan-tilt kit for realizing motion control with a joystick according to any one of claims 1-6, **characterized in that**, the pan-tilt kit has a follow-up mode in which the hand-held pan-tilt kit changes a shooting angle and / or a shooting direction of a shooting device in accordance with the state of the joystick, and / or a steady mode in which the hand-held pan-tilt kit is still in a steady shooting state in a bumpy environment.

9. The hand-held pan-tilt kit for realizing motion control with a joystick according to claim 8, **characterized in that**, the joystick piece further comprises a button for switching the mode of the pan-tilt kit.

10. The hand-held pan-tilt kit for realizing motion control with a joystick according to any one of claims 1-8, **characterized in that**, a motion state of the pan-tilt kit can be controlled by the joystick controller.
